# EUROPÄISCHE PATENTSCHRIFT

(11) **EP 1 492 637 B1**
(45) Veröffentlichungstag und Bekanntmachung des Hinweises auf die Patenterteilung: **08.06.2005**
(21) Anmeldenummer: 03729783.5
(22) Anmeldetag: 30.06.2003
(51) Int. Cl.: B21F 35/02, B23Q 7/02

(54) **VORRICHTUNG ZUM AUSRICHTEN VON FEDERN**
DEVICE FOR ORIENTING SPRINGS
DISPOSITIF POUR ORIENTER DES RESSORTS

(30) Priorität: 26.07.2002 CH 13152002
(43) Veröffentlichungstag der Anmeldung: 05.01.2005
(73) Patentinhaber: Spühl AG St. Gallen, 9303 Wittenbach (CH)
(72) Erfinder: WIDMER, Urs, CH-9320 Arbon (CH)
(74) Vertreter: Gachnang, Hans Rudolf
(86) Internationale Anmeldenummer: PCT/CH2003/000428
(87) Internationale Veröffentlichungsnummer: WO 2004/011173

(56) Entgegenhaltungen:
- EP-A- 0 899 034
- DE-A- 19 542 844
- DE-A- 19 542 847
- GB-A- 1 391 201

## Beschreibung

Gegenstand der Erfindung ist eine Vorrichtung zum Ausrichten von Federn gemäss Oberbegriff des Patentanspruchs 1.

Bei der bekannten automatischen Herstellung von Federkernmatratzen werden an einer Federwindemaschine hergestellte Federn von einem Transportstern mit mehreren Armen abgenommen, falls erwünscht, an den Enden verknotet und allenfalls auch zusätzlich einer Wärmebehandlung unterzogen. An den Enden der Arme sind Greiferhände angeordnet, die die Federn von der Federwindemaschine abnehmen und während des Transports festhalten. Vom Transportstern werden die Federn an ein Transportbandpaar überführt und von diesem in einen Federkern-Montageautomaten eingeleitet, um dort schlussendlich mit Spiraldrähten miteinander verbunden zu einem Federkern vorgebbarer Grösse zusammengefügt zu werden. Die an der Federwindemaschine hergestellten Federn erreichen ohne zusätzliche, die Federn justierende Massnahmen das Transportband und damit den Federkern-Montageautomaten mehr oder weniger gleich ausgerichtet, d.h. die Drahtenden im Bereich der Endringe liegen jeweils nur mehr oder weniger an der gleichen Stelle. Im weiteren bedeutet dies, dass beispielsweise die letzten Federn einer Reihe nach aussen gerichtet sind und so den Matratzenstoff durchstossen können. Um dies zu verhindern, wird üblicherweise die letzte Feder um 180° um ihre eigene Achse gedreht, damit die freien Enden oder die beiden Knoten der Enden oder Knoten der letzten Feder gegen die zweitletzte Feder gerichtet sind. Häufig ist es aber auch erwünscht, die Federn paarweise mit einander gegenüberliegenden Knoten oder Federdrahtenden anzuordnen. Zu diesem Zweck, d.h. der abwechselnden Ausrichtung der Knoten, sind bereits verschiedene Vorrichtungen bekannt. Aus der DE-A1 19542847 ist es bekannt, eine vom Drehstern aus der Federwindevorrichtung herangeführte Feder innerhalb des Transportbandes mit einem geeignet ausgebildeten Schieber um die eigene Achse zu drehen, bis der Knoten in der gewünschten Winkellage angelangt ist. Die Verschiebung des Knotens erfolgt durch eine Schiebevorrichtung, die derart ausgelegt ist, dass nur die einmal eingestellte Ausrichtung des Knotens etwa erreicht werden kann. Eine andere gewünschte Ausrichtung kann nur durch Auswechseln des Schiebers der Schiebevorrichtung erfolgen.

Die Aufgabe der vorliegenden Erfindung besteht nun darin, eine Vorrichtung zum Ausrichten von Federn bzw. deren Knoten oder generell der Endbereiche in eine vorgebbare und jederzeit änderbare Winkellage zu schaffen.

Gelöst wird diese Aufgabe durch eine Vorrichtung mit den Merkmalen des Patentanspruchs 1. Vorteilhafte Ausgestaltungen sind in den abhängigen Ansprüchen definiert.

Die frei wählbare Drehwinkel-Endstellung des Drehtellers während dessen Drehbewegung von der Übernahmestelle zur Übergabestelle ermöglicht es, die Lage der Knoten und/oder Enden des Federdrahtes in jede gewünschte Stellung auf dem Transportband zu bringen. Beliebige Endlagen sind folglich von Feder zu Feder möglich. Bei Verwendung mehrerer Drehteller auf einer die Drehteller aufnehmenden Drehscheibe oder dergleichen kann die Kadenz der ausgerichteten Federn wesentlich erhöht werden. Zudem wird durch die Verwendung mehrerer Drehteller deren Drehgeschwindigkeit beim Ausrichten vermindert und so ein Gleiten der zwischen den Drehtellerpaaren eingespannten Federn auf den Drehtelleroberflächen verhindert. In einer bevorzugten Ausgestaltung der Erfindung werden bei Verwendung mehrerer Drehteller letztere durch einen einzigen Zahnriemen oder Kettenübertrieb synchron und schlupffrei angetrieben. Der Antrieb des Zahnriemens erfolgt aus dem Drehzentrum der Drehscheibe heraus. Letztere wird vorzugsweise ebenfalls durch einen Servoantrieb angetrieben und schrittweise von der Übernahme- zur Übergabestelle geführt. Das Einführen der Feder vom Transportstern bzw. aus deren Greiferhänden heraus in das Drehtellerpaar und von letzterem aus diesem heraus in das Transportbandpaar erfolgt in herkömmlicher Weise durch linear angetriebene Schieber oder durch Greifer auf einer Schwenkachse.

Anhand illustrierter Ausführungsbeispiele wird die Erfindung näher erläutert. Es zeigen:
- Figur 1: eine schematische Darstellung eines Drehsterns und eines Transportbandes mit einem dazwischen angeordneten einzelnen, auf einem Kurbelarm gelagerten Drehteller,
- Figur 2: wie Figur 1, jedoch eine Vorrichtung mit zwei Drehtellern,
- Figur 3: einen Längsschnitt durch eine Drehscheibe mit drei Drehtellern sowie der Ein- und Ausschiebevorrichtung,
- Figur 4: eine Aufsicht auf die Drehscheibe in Figur 3 und
- Figur 5: eine Ansicht der Drehscheibe mit Riemenantrieb der Drehteller.

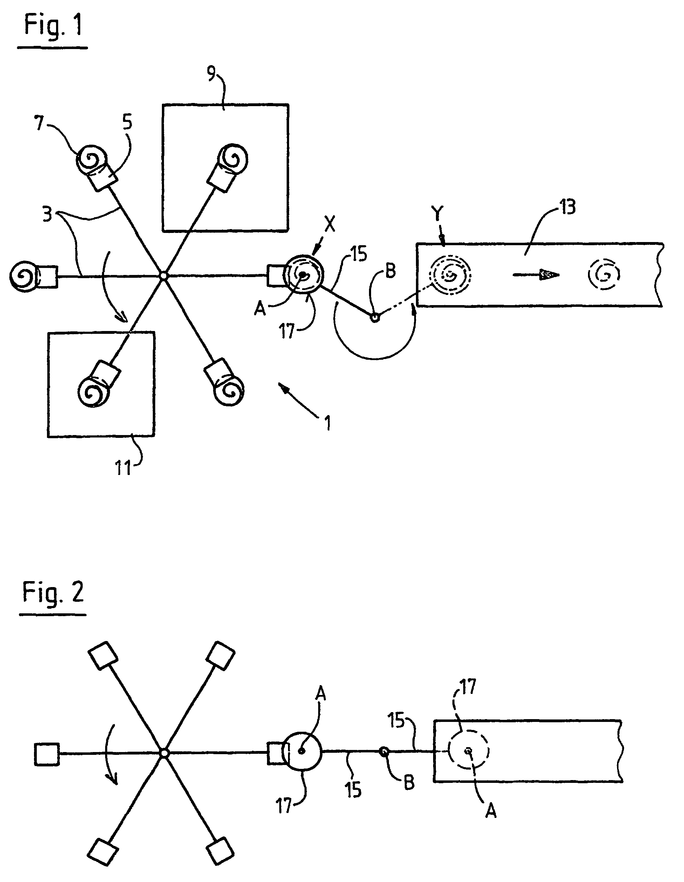

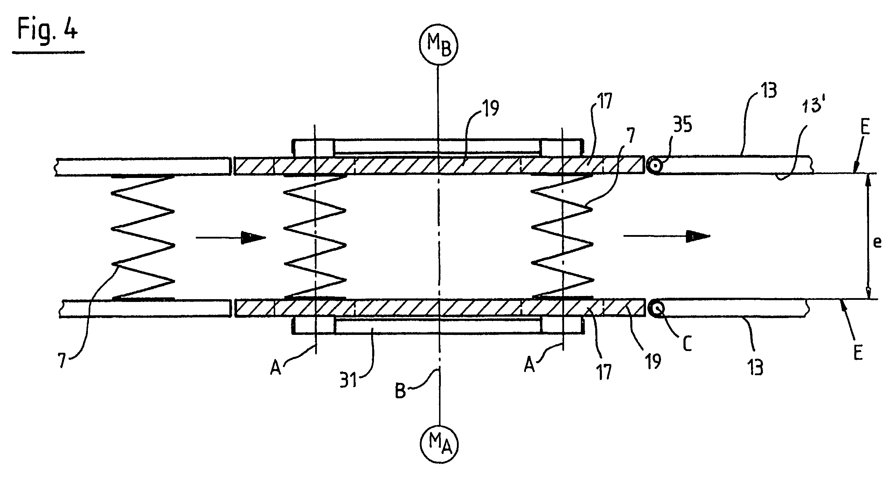

In Figur 1 ist schematisch ein Drehstern 1 mit sechs Greiferarmen 3 und an deren Enden angeordnete mechanisch oder elektrisch antreibbare Greiferhände 5 sichtbar. Mit den Greiferhänden 5, deren Ausbildung Stand der Technik ist, werden die Federn 7 erfasst und gehalten, welche zuvor an einer Windevorrichtung 9 gewunden worden sind. In einer Knotvorrichtung 11 können deren Enden verknotet werden. Zusätzlich zu der Knotvorrichtung 11 kann auf dem Transportweg, den die Federn 7 in den Händen 5 gehalten durchlaufen, eine Wärmebehandlungsstation angeordnet sein (keine Abbildung). Beabstandet zu der mit X bezeichneten Übernahmestelle, an der die Federn 7 aus der Greiferhand 5 entnommen werden, liegt eine Übergabestelle Y, an der die Federn 7 einem Transportbandpaar 13 übergeben werden. Zwischen der Federübernahmestelle X und der Federübergabestelle Y ist auf einer Drehachse B durch einen Servomotor M_{B} antreibbar ein Kurbelarm 15 befestigt, an dessen Ende ein axial beabstandetes durch einen weiteren Servomotor antreibbares Drehtellerpaar 17 angeordnet ist.

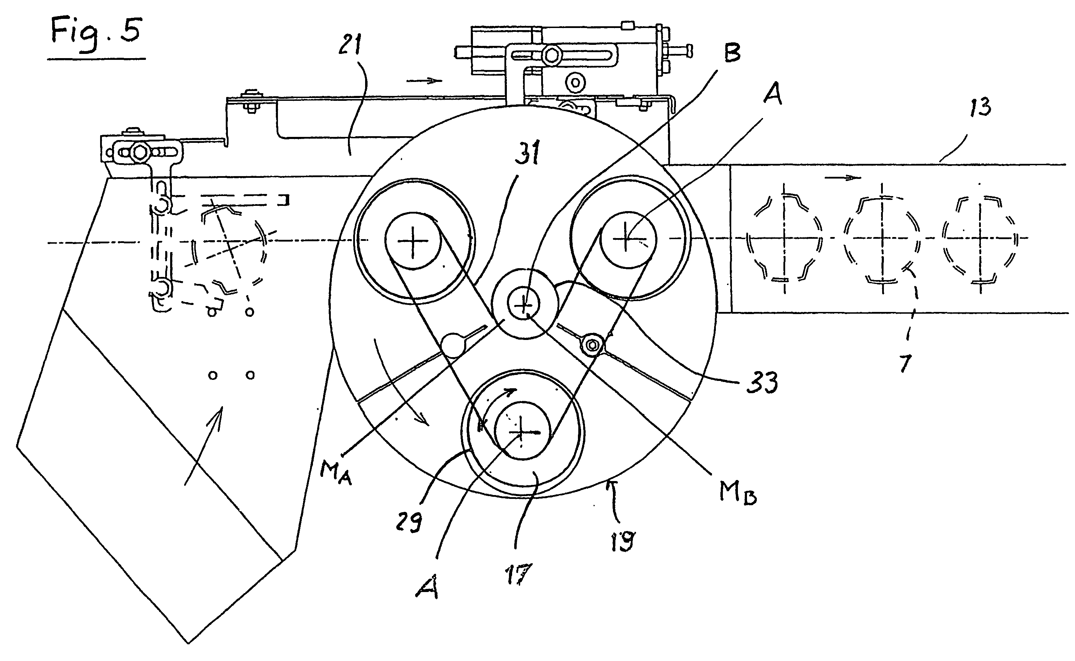

In Figur 2 liegen die Verhältnisse gleich wie in Figur 1, mit der Ausnahme, dass auf der Drehachse B zwei Kurbelarme 15 drehbar befestigt sind, an deren Enden wiederum Drehtellerpaare 17 angeordnet sind. Die Antriebe sowohl des bzw. der Arme 15 und der darauf gelagerten Drehteller 17 werden anhand der in Figur 5 dargestellten, besonders vorteilhaften Ausgestaltung der Erfindung mit drei Drehtellerpaaren 17 näher erläutert. Zwecks Erhöhung der Kadenz, d.h. der pro Minuten auszurichtenden Federn 7, sind in dieser Ausgestaltung der Erfindung je drei Drehteller 17 in je einer Drehscheibe 19 angeordnet. Die Drehscheiben 19 sind wiederum um das Drehzentrum B antreibbar gelagert. Die Drehteller 17 drehen sich in den dafür vorgesehenen Ausnehmungen 29 in den Drehscheiben 19 um die Drehachsen A. Die zwei einander gegenüberliegenden Drehscheiben der Drehscheibenpaare 19 sind antreibbar auf der Achse B gelagert und deren sich gegenüberliegende Oberflächen sowie die Oberflächen der in den Drehscheiben 19 drehbar gelagerten Drehteller 17 liegen in gemeinsamen Ebenen E. Der Abstand e zwischen den beiden durch die Drehscheiben 19 und Drehteller 17 gebildeten Ebenen E ist kleiner als die Nennhöhe einer entspannten Feder 7. Durch Zusammenpressen der Feder 7 spätestens kurz vor dem Einschieben der letzteren an der Übernahmestelle X von der Greiferhand 5 zwischen die Drehteller 17 wird die Feder 7 durch ihre eigene Spannkraft während des Transports zur Übergabestelle Y durch Reibschluss der Endringe mit der Oberfläche der Drehteller 17 gehalten. Das Stauchen der Feder 7 an der Übernahmestelle X kann beispielsweise zwischen zwei zusammenlaufenden Platten 25 erfolgen. Die Entnahme der Feder 7 aus der Greiferhand 5 und das Einführen der Feder 7 zwischen die Drehteller 17 kann durch einen Schieber 21 mit geeignet ausgebildeten Schiebefingern 23 erfolgen. Analog zum Einschieben sind an der Übergabestelle Y Übergabefinger 27 ausgebildet, die einzeln jedoch synchron angetrieben oder auf einer gemeinsamen Platte 28 gehalten und gelagert sind wie die Übergabefinger 23.
Die in den eng tolerierten, kreisrunden Ausnehmungen 29 in den beiden Drehscheiben 19 drehbar gelagerten Drehteller 17 werden von je einem doppelseitigen Zahnriemen 31 teilweise umschlungen. Im weiteren umschlingt jeder der beiden Zahnriemen 31 ein auf der Antriebsachse B der Drehscheibe 19 sitzendes Antriebsriemenrad 33, das von einem Servomotor M_{A} antreibbar ist. Die Drehscheibe 19 ist ebenfalls durch den Servomotor M_{B} antreibbar und zwar unabhängig vom Antrieb der Drehteller 17 (Figur 5). Die beiden Antriebswellen für die Drehscheiben 19 und die Antriebsriemenräder 33 sind koaxial angeordnet.

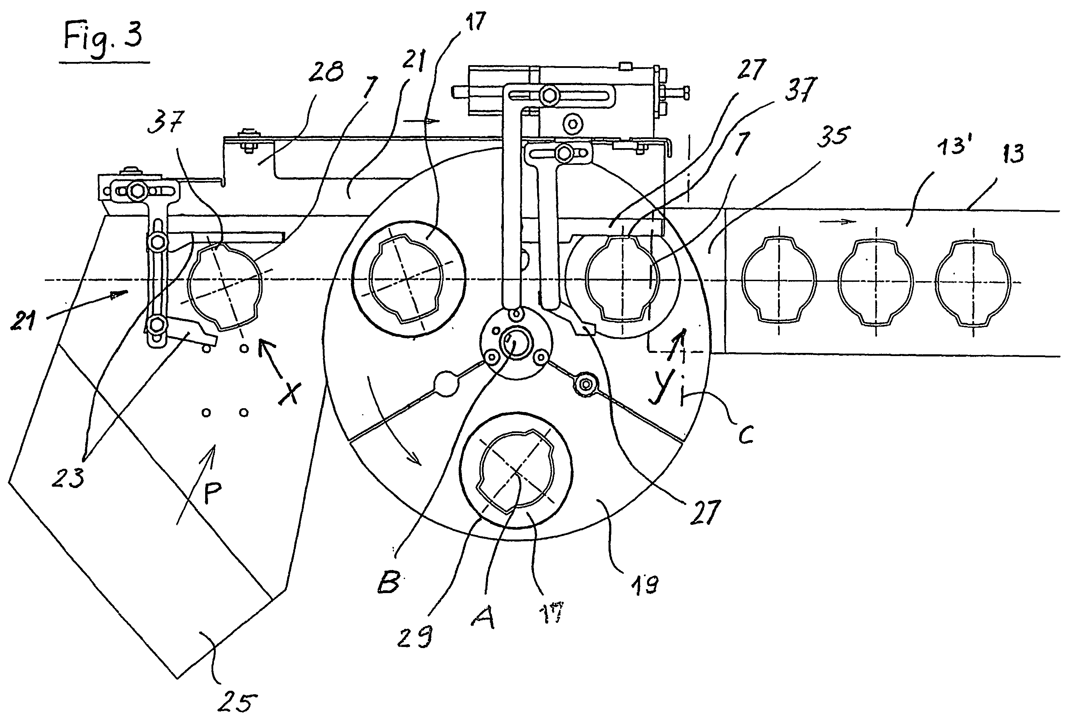

Im folgenden wird die Funktionsweise der Vorrichtung näher erläutert. Mit dem Drehstern 1 werden einzeln Federn 7 von unten (Pfeil P) zwischen den zwei Spann- und Einführbleche 25 im Übernahmebereich X und gehalten von der Greiferhand 5 eingeleitet und dabei axial zusammengepresst. Mit dem Schieber 21 bzw. deren Vorschubfinger 23 wird die Feder 7 aus der in Figur 3 nicht dargestellten Greiferhand 5 herausgenommen und zwischen die einander paarweise gegenüberliegenden Drehscheiben 19 und anschliessend die darin angeordneten Drehteller 17 eingeschoben und darauf konzentrisch zur Drehachse A der Drehteller 17 positioniert. Gleichzeitig schiebt der Entnahmefinger 27 eine sich an der Federübergabestelle Y befindliche Feder 7 aus dem dort angelangten Drehtellerpaar 17 heraus zwischen die einander gegenüberliegenden inneren Trume 13' der Transportbänder 13 (rechte Seite in Figur 3). Die Umlenkrollen 35 der beiden Transportbänder 13 sind auf vertikalen Achsen C gelagert, die wenig ausserhalb der Peripherie der Drehscheibe 19 liegen. Nach dem überführen einer Feder 7 aus der Greiferhand 5 in den benachbart liegenden Drehteller 17 und dem synchronen Herausführen einer ausgerichteten Feder 7 aus dem dem Transportbandpaar 13 benachbart liegenden Drehteller 17 erfolgt eine Drehung der Drehscheibe 19 um 120°, so dass die soeben aus der Greiferhand 5 an die Drehteller 17 überführte Feder 7 nach unten geführt wird und die zuvor unten befindliche nun den Transportbändern 13 gegenüberliegt. Benachbart zur nachfolgenden Greiferhand 5 mit einer neuen Feder 7 liegt nun ein leeres Drehtellerpaar 17, das soeben seine Feder 7 an das Transportbänderpaar 13 übergeben hat.
Während der Drehbewegung der Drehscheibe 19 um zweimal 120° werden alle Drehteller 17 synchron, da verbunden durch die Zahnriemen 31 und angetrieben vom Servomotor M_{A}, in die gewünschte Drehwinkelendlage an der Übergabestelle Y geführt. In der Abbildung gemäss Figur 3 liegen dann die beiden Flachstellen 37 an den Endringen der Federn 7 oben und unten, wobei abwechslungsweise die schmälere Flachstelle 37 oben und die breitere unten liegt und umgekehrt. Durch eine entsprechende Ansteuerung des Antriebservomotors M_{A} der Drehteller 17 kann die schmale Flachstelle 37 auch nach rechts oder links ausgerichtet werden, je nachdem wie die Anforderungen innerhalb des Federkern-Montageautomaten (nicht dargestellt) vorgegeben werden.
Der besseren Übersichtlichkeit halber sind in den Figuren nicht Knoten oder Drahtenden der Endringe dargestellt, sondern Flachstellen unterschiedlicher Breiten und deren Drehlage bezüglich der Horizontalen in den Figuren.

## Patentansprüche

1. Vorrichtung zum Ausrichten der Knoten oder Drahtenden an den Endringen von Federn (7) beim Transport der Federn (7) von einer Federwindemaschine zu einem Federkern-Montageautomaten mit einem Transportstern (1), dessen Greiferhände (5) die Federn (7) an der Windestation (9) der Federwindemaschine übernehmen und mit einem Paar Transportbänder (13) zum Weitertransport der ausgerichteten Federn (7) zum Montageautomaten sowie einem Transferelement (17,19) zum Überführen der Federn (7) vom Transportstern (1) zu den Transportbändern (13), **dadurch gekennzeichnet, dass** das Transferelement mindestens ein antreibbares sich beabstandet gegenüberliegendes Drehtellerpaar (17) umfasst, dessen gemeinsame Drehachse (A) in einem Abstand zu einer zentralen Drehachse (B) umlaufend gelagert ist.

2. Vorrichtung nach Anspruch 1, **dadurch gekennzeichnet, dass** das Drehtellerpaar (17) durch einen Servomotor (M_{A}) antreibbar ist und dass eine zwischen dem Drehtellerpaar (17) gespannt gehaltene Feder (7) zwischen der Übernahme vom Transportstern (1) an der Übernahmestelle (X) bis zur Übergabe an das Transportband (13) an der Übergabestelle (Y) in eine beliebig wählbare Drehwinkel-Endstellung überführbar ist.

3. Vorrichtung nach einem der Ansprüche 1 oder 2, **dadurch gekennzeichnet, dass** die Drehteller (17) von mindestens zwei Drehtellerpaaren (17) in kreisrunden Ausnehmungen (29) in zwei einander gegenüberliegenden Drehscheiben (19) synchron drehbar gelagert und von einem Antriebsmotor (M_{A}) antreibbar gelagert sind.

4. Vorrichtung nach Anspruch 3, **dadurch gekennzeichnet, dass** die in den Drehscheiben (19) gelagerten Drehteller (17) vom Servomotor (M_{A}) über einen gemeinsamen Zahnriemen (31) und die Drehscheiben (19) von einem weiteren Servomotor (M_{B}) unabhängig voneinander antreibbar sind.

5. Vorrichtung nach einem der Ansprüche 1 bis 4, **dadurch gekennzeichnet, dass** die Federn (7) von einem Schiebefinger (23) aus der Greiferhand (5) am Drehstern (1) zwischen ein Drehtellerpaar (17) einschiebbar und durch mindestens einen Übergabefinger (27) aus dem Drehtellerpaar (17) heraus zwischen die Trume (13') der zwei umlaufenden Transportbänder (13) überführbar sind.

6. Vorrichtung nach Anspruch 5, **dadurch gekennzeichnet, dass** die Federn (7) vor der Entnahme aus der Greiferhand (5) durch den Schiebefinger (23) zwischen zwei zusammenlaufende Spann- und Einführbleche (25) axial zusammengepresst werden.

## Claims

1. A device for aligning the knots or wire ends at the end rings of springs (7) with the transport of springs (7) from a spring winding machine to a spring interior assembly automatic machine with a transport star (1), whose gripper hands (5) take over the springs (7) at the winding station of the spring winding machine and with a pair of transport belts (13) for the further transport of the aligned springs (7) to the assembly automatic machine as well as with a transfer element (17, 19) for transfering the springs (7) from the transport star (1) to the transport belts (13), **characterized in that** the transfer element comprises at least one drivable pair of rotary plates (17) lying opposite one at a distance, whose common rotary axle (A) is revolvingly mounted at a distance to a central rotary axle (B).

2. A device according to claim 1, **characterized in that** the rotary plate pair (17) is drivable by a servo-motor (M_{A}) and that a spring (7) held clamped between the rotary plate pair (17) between the take-over by the transport star (1) at the take-over location (X) up to the transfer to the transport belt (13) at the transfer loation (Y) may be transferred at any selectable rotary angle end position.

3. A device according to one of the claims 1 or 2, **characterized in that** the rotary plates (17) are synchronously rotatably mounted by at least two rotary plate pairs (17) in circular recesses (29) in two rotary disks (19) lying opposite one another, and are drivably mounted by a drive motor (M_{A}).

4. A device according to claim 3, **characterized in that** the rotary plates (17) mounted in the rotary disks (19) may be driven by the servo-motor (M_{A}) via a common toothed belt (31) and the rotary disks (19) are drivable by a further servo-motor (M_{B}) independently of one another.

5. A device according to one of the claims 1 to 4, **characterized in that** the springs (7) are insertable by a displacing finger (23) out of the gripper hand (5) on the rotary star (1) into a rotary plate pair (17) and may be transferred by at least one transfer finger (27) out of the rotary plate pair (17) between the belt faces (13') of the two revolving transport belts (13).

6. A device according to claim 5, **characterized in that** the springs (7) before removal from the gripper hand (5) are axially pressed together between two revolving tensioning and introduction plates (25) by the displacing finger (23).

## Revendications

1. Dispositif pour orienter les noeuds ou les extrémités de fil métallique aux anneaux d'extrémité de ressorts (7) lors du transport des ressorts (7) d'une machine à enrouler les ressorts à un automate de montage de noyaux à ressorts, avec une étoile de transport (1) dont les pinces de préhension (5) prennent en charge les ressorts (7) à la station d'enroulement (9) de la machine à enrouler les ressorts et avec une paire de bandes transporteuses (13) pour le transport des ressorts (7) orientés vers l'automate de montage ainsi qu'un élément de transfert (17, 19) pour transférer les ressorts (7) vers les bandes transporteuses (13), **caractérisé par le fait que** l'élément de transfert présente au moins une paire de plateaux tournants (17) entraînables, se faisant face et espacés, dont l'axe de rotation commun (A) est monté de manière à tourner à distance autour d'un axe de rotation central (B).

2. Dispositif selon la revendication 1, **caractérisé par le fait que** la paire de plateaux tournants (17) est entraînable par un servomoteur (M_{A}) et qu'un ressort (7) maintenu tendu entre la paire de plateaux tournants (17) est transférable dans une position finale d'angle de rotation choisie quelconque depuis la prise en charge par l'étoile de transport (1) au point de prise en charge (X) jusqu'au transfert à la bande transporteuse (13) au point de transfert (Y).

3. Dispositif selon l'une des revendications 1 ou 2, **caractérisé par le fait que** les plateaux tournants (17) d'au moins deux paires de plateaux tournants (17) sont montés de manière à pouvoir tourner de façon synchrone dans des évidements (29) circulaires dans deux disques tournants (19) situés l'un en face de l'autre et sont montés de manière à pouvoir être entraînés par un moteur d'entraînement (M_{A}).

4. Dispositif selon la revendication 3, **caractérisé par le fait que** les plateaux tournants (17) montés dans les disques tournants (19) peuvent être entraînés par le servomoteur (M_{A}) par l'intermédiaire d'une courroie crantée commune (31) et les disques tournants (19) par un autre servomoteur (M_{B}), et ce de manière indépendante.

5. Dispositif selon l'une des revendications 1 à 4, **caractérisé par le fait que** les ressorts (7) peuvent être insérés par un doigt coulissant (23) entre une paire de plateaux tournants (17) depuis la pince de préhension (5) de l'étoile tournante (1) et transférés par au moins un doigt de transfert (27) depuis la paire de plateaux tournants (17) entre les brins (13') des deux bandes transporteuses (13) tournantes.

6. Dispositif selon la revendication 5, **caractérisé par le fait que** les ressorts (7) sont comprimés axialement entre deux tôles de serrage et de chargement concourantes (25) avant d'être prélevés de la pince de préhension (5) par le doigt coulissant (23).
